# EUROPEAN PATENT SPECIFICATION

(11) **EP 3 643 389 B1**
(45) Date of publication and mention of the grant of the patent: **27.03.2024**
(21) Application number: 18820708.8
(22) Date of filing: 13.06.2018
(51) Int. Cl.: B01D 46/30

(54) **DUST COLLECTION DEVICE WITH LOCAL EXHAUST VENTILATION FUNCTION, AND DUST COLLECTION AND EXHAUST VENTILATION SYSTEM USING SAME**
STAUBSAMMELVORRICHTUNG MIT LOKALER ABLUFTFUNKTION UND STAUBSAMMEL- UND ABLUFTSYSTEM DAMIT
DISPOSITIF DE COLLECTE DE POUSSIÈRE À FONCTION DE VENTILATION D'ÉCHAPPEMENT LOCALE, ET SYSTÈME DE COLLECTE DE POUSSIÈRE ET DE VENTILATION D'ÉCHAPPEMENT L'UTILISANT

(30) Priority: 20.06.2017 JP 2017120131
(43) Date of publication of application: 29.04.2020
(73) Proprietor: Horkos Corp, Fukuyama-shi, Hiroshima 720-8650 (JP); TEC Project Services Corporation, Narashino-shi Chiba 275-0024 (JP)
(72) Inventor: FUKUSHIMA, Daiji, Fukuyama-shi Hiroshima 720-2413 (JP); KURIHARA, Hidenao, Fukuyama-shi Hiroshima 720-2413 (JP); SHIME, Hideki, Narashino-shi Chiba 275-0024 (JP); KOCHIHIRA, Asafumi, Narashino-shi Chiba 275-0024 (JP); YAMAGUCHI, Yoshitaka, Narashino-shi Chiba 275-0024 (JP)
(74) Representative: Kramer Barske Schmidtchen Patentanwälte PartG mbB
(86) International application number: PCT/JP2018/022510
(87) International publication number: WO 2018/235686

(56) References cited:
- WO-A2-2005/000745
- FR-A1- 2 400 941
- GB-A- 879 216
- JP-A- H1 170 307
- JP-A- S5 164 473
- JP-A- 2009 202 069
- JP-Y2- S5 227 867
- JP-Y2- S5 530 586
- US-A- 3 220 165
- US-A- 5 165 900

## Description

### TECHNICAL FIELD

The present invention relates to a dust collection apparatus using a package of filter media each having a granular or indefinite shape as a filter medium. In particular, the present invention relates to a dust collection apparatus having a local exhaust function suitable for pharmaceutical facilities and chemical product facilities where highly active pharmaceutical substances are handled.

### BACKGROUND ART

GB 879 216 A discloses an apparatus for filtration of dust from gases. WO 2005/000745 A2, FR 2 400 941 A1 and US 3 220 165 A are further examples of devices for the filtration of dust from gas.

In manufacturing sites where highly active pharmaceutical substances as pharmaceutical raw materials and agricultural chemical raw materials are handled, various measures are taken against the highly active pharmaceutical substances because only a small amount of highly active pharmaceutical substance strongly affects the human body or has toxicity. Examples of the measures include a measure to prevent exposure to a highly active pharmaceutical substance during an operation in order to protect a worker from a health impairment and a measure to prevent a highly active pharmaceutical substance from flying and mixing into another manufacturing process as a foreign matter or dispersing to the outside. The prevention of exposure to highly active pharmaceutical substances is indispensable for establishing industrial safety and health, and the prevention of flying and mixing into another process is important in quality control of products. Further, the prevention of the dispersion of highly active pharmaceutical substances to the outside is necessary for environmental protection.

In manufacturing sites such as pharmaceutical facilities, an operation of weighing a highly active pharmaceutical substance, an operation of charging the substance into a tank, and an operation of discharging a product from a centrifuge are performed, and there is a high risk that dust of the highly active pharmaceutical substance may fly off during these operations. Thus, a dust collection apparatus is used to collect the dust. However, a dust collection apparatus for highly active pharmaceutical substances existing in the market at present uses a bag filter as a filter medium like a general dust collection apparatus (e.g., Patent Literature 1).

However, in the dust collection apparatus using the bag filter (hereinbelow, referred to as the "bag filter dust collection apparatus"), the used filter has to be taken out in replacing the filter. The replacing operation is performed with the apparatus body open. Thus, dust adhering to the filter may fly off, and a worker may be exposed to the flying dust. In order to avoid the risk of exposure, it is necessary to prevent the exposure by taking steps (bag-in/bag-out) of attaching a plastic bag for collection to a takeout port for taking out a filter and collecting the used filter, then attaching a plastic bag in which a new filter is put to the takeout port, and inserting the filter through the bag. Thus, a filter replacing operation is complicated. Further, even when these steps are taken, there is still a possibility of exposure caused by an operational error due to the complicated replacing operation. Further, there is a possibility of exposure not only in the filter replacement, but also in discharging, and collecting and discarding dust inside the apparatus. Thus, measures for these cases are also required.

Further, the bag filter dust collection apparatus includes a mechanism for fixing the filter and a mechanism for brushing off dust adhering to the filter inside the apparatus, and thus has a complicated structure. Therefore, it is difficult to thoroughly wash all parts of the apparatus, and a washing liquid tends to remain inside.

Further, in the bag filter dust collection apparatus, in order to ensure a large air flow rate, the shape of the filter itself is enlarged because of constraints to the face velocity of air that can pass through the filter. In addition, the entire apparatus is increased in size and weight due to the brush-off mechanism and the like incorporated therein. Thus, the bag filter dust collection apparatus has a drawback in that the apparatus cannot freely move to any place.

On the other hand, there is known a dust collection apparatus using a package of a large number of granular filter media (spherical or columnar bodies) (hereinbelow, referred to as the "granular filter medium dust collection apparatus) instead of the bag filter. For example, in Patent Literatures 2 to 5 and Non Patent Literature 1, high-temperature gas is introduced into the granular filter media while allowing fine granules constituting the granular filter media to flow to remove dust or the like inside the gas. In Patent Literature 6, exhaust gas is brought into contact with granular filter media while rotating a container packed with fine granules constituting the filter media. In Patent Literature 7, a fluid is passed through granular filter media held at a fixed position midway between an inlet port and an outlet port for the fluid to remove impurities in the fluid.

Further, Patent Literatures 4, 6, 7 describe a method for recycling the filter media with dust or the like adhered. In Patent Literatures 4, 6, the fine granules constituting the filter media are discharged by opening a valve which is disposed on the lower part of a packing space packed with the granules, and the discharged granules are fed to a recycling apparatus and subjected to a recycling process. Then, the granules are packed into the packing space from above to reuse the granules. In Patent Literature 7, the fine granules constituting the filter media are agitated by pressure air to remove substances adhering to the surfaces of the granules, thereby recycling the filter media.

When a bag filter is used as a filter medium in a dust collection apparatus, there are problems in that it is difficult to wash the filter in an installed state or wash the filter detached from the apparatus body, the filter remaining wet cannot be used, and the heat resistance and chemical resistance of the filter are low. These problems are considerably improved by using the granular filter media as described above. Therefore, employing the granular filter medium dust collection apparatus instead of the conventional bag filter dust collection apparatus can be considered also in pharmaceutical facilities.

However, in all the granular filter medium dust collection apparatuses described in Patent Literatures 2 to 6 and Non Patent Literature 1, high-temperature combustion gas or the like is to be filtered, and the high-temperature air is brought into contact with the granular filter media while allowing the granular filter media to flow to remove dust. On the other hand, when dust of a highly active pharmaceutical substance is filtered in a pharmaceutical facility or the like, the use condition differs from the above. Dust generated in an operation of handling a highly active pharmaceutical substance of a medical and pharmaceutical product, which is a target of the present teachings, is not too hot to touch for a worker, and the amount of dust is smaller than dust generated in a continuous gas-treating plant. Thus, it is not necessary to allow the granular filter media to flow like the case of combustion gas, and an apparatus for it is not required. Further, in addition to the amount of generated dust smaller than that in a large continuous plant, an operation time is an individual operation unit and relatively short. Thus, the amount of dust adhering to the filter media during the operation of the dust collection apparatus is limited as compared to the continuous plant. Therefore, in recycling the filter media, there is little need to provide a dedicated recycling apparatus or agitating apparatus as described in Patent Literatures 4, 6, 7.

In view of the above, it is not realistic to install the granular filter medium dust collection apparatus described in each of the above Patent Literatures as it is in a site where a highly active pharmaceutical substance is handled such as a pharmaceutical facility in view of function, cost, and space. It is more important, as described at the beginning, how to prevent exposure to highly active pharmaceutical substances. Also in the granular filter medium dust collection apparatus, there is a risk of exposure in, for example, replacing the filter media as a matter of course. However, in each of the Patent Literatures described above, measures against such exposure are not mentioned at all.

Further, in a pharmaceutical facility or the like, when dust of a highly active pharmaceutical substance generated in a work site enters a local exhaust duct which is laid inside the facility, there is a problem in that the dust remains inside the duct over a long distance, which causes the secondary flying of the dust. The most effective measure against this problem is collecting and containing the dust immediately near the work site. For this measure, a small and mobile dust collection apparatus is demanded. However, since the conventional granular filter medium dust collection apparatus is dedicated for high-temperature gas, the scale of the apparatus is large, and the apparatus is not suitable for a pharmaceutical facility where a unit operation is performed.

Further, in the granular filter medium dust collection apparatus, it is also important to facilitate replacement and washing of the filter media and each component and disassembly and assembly of the apparatus to achieve an efficient maintenance operation while preventing exposure. For example, in the dust collection apparatus of Patent Literature 7, the granular filter media are stored in each of a plurality of housing spaces separated in an up-down direction. However, in such a structure, the replacement and washing of the filter media are not easy, and the disassembly and assembly take a considerable time.

Further, the conventional granular filter medium dust collection apparatus is basically aimed at removing dust, and not aimed at reducing a gas component. In a pharmaceutical facility or the like, a solvent atmosphere coexists in a place where dust is handled. Thus, an apparatus or a system capable of reducing a gas effective component by sucking also a gas component using the flow of air current for dust collection is demanded. However, an apparatus having both a function as a small dust collection apparatus that can be freely carried to a work place and a function as a local exhaust apparatus cannot be achieved by the system described in each of Patent Literatures described above.

### CITATIONS LIST

### PATENT LITERATURE

Patent Literature 1: JP 2014-50821 A
Patent Literature 2: JP 2001-259329 A
Patent Literature 3: JP 9-239221 A
Patent Literature 4: JP 9-220434 A
Patent Literature 5: JP 2001-129338 A
Patent Literature 6: JP 2001-25644 A
Patent Literature 7: JP 2005-46738 A
Patent Literature 8: JP 2013-94691 A

### NON PATENT LITERATURE

Non Patent Literature 1: "Particle Deposition Characteristics in Annulus Granular Filter Beds", Muroran Institute of Technology Journal No. 53 (November, 2003), pp. 7-13 (http://hdl.handle.net/10258/79)

### BRIEF SUMMARY

### TECHNICAL PROBLEMS

In view of the problems as described above, it is an object to provide a dust collection apparatus having a local exhaust function and a dust collection/exhaust system using the dust collection apparatus that efficiently prevent or reduce exposure, can be reduced in size and weight, and further have excellent washability and excellent maintainability such as assemblability and disassemblability.

### SOLUTIONS TO PROBLEMS

The above object is solved by a dust collection apparatus according to claim 1.

A dust collection apparatus according to the present teachings has a local exhaust function and includes: a housing; a filter medium stored inside the housing; an intake port for introducing a fluid to be filtered to the inside of the housing; and an ejection port for ejecting the fluid filtered by making contact with the filter medium. The filter medium includes a package of a large number of filter media each having a granular or indefinite shape. In the present teachings, the dust collection apparatus further includes: an outer tube disposed inside the housing and configured to allow the fluid to pass therethrough; an inner tube disposed inside the outer tube and configured to allow the fluid to pass therethrough; a charge port for charging and packing the filter medium into a packing space formed between the outer tube and the inner tube from above; and a discharge port for discharging the filter medium packed in the packing space downward.

A dust collection/exhaust system according to the present teachings includes: the dust collection apparatus having a local exhaust function described above; a suction duct having one end connected to the intake port of the dust collection apparatus; a suction hood connected to the other end of the suction duct; and exhaust means configured to exhaust a fluid which has been sucked through the suction hood and from which dust has been removed by the dust collection apparatus. Alternatively, the dust collection/exhaust system according to the present teachings may include: the dust collection apparatus having a local exhaust function described above; and a filter device for removing dust remaining in a fluid ejected through the ejection port of the dust collection apparatus.

### ADVANTAGEOUS EFFECTS

The dust collection apparatus of the present teachings does not use a bag filter. Thus, it is possible to minimize an operation in which dry powder or the like is in an open state in replacement or washing of the filter medium, which largely reduces the risk of exposure. Further, the dust collection apparatus of the present teachings has a simple structure. Thus, the entire apparatus is small and lightweight. Further, the dust collection apparatus of the present teachings is so designed as to be easily disassembled and assembled. Thus, a washing operation is easily performed, and the maintainability is excellent.

According to the dust collection/exhaust system of the present teachings, dust generated in a work site is contained between the suction hood and the dust collection apparatus. Thus, it is possible to prevent a worker from being exposed to dust and prevent dust from mixing into another process or dispersing to the outside. Further, it is also possible to prevent the secondary flying of dust caused by the dust entering and remaining in a local exhaust duct or the like.

### BRIEF DESCRIPTION OF DRAWINGS

Fig. 1 is an external view of an example of a dust collection apparatus of the present teachings.
Fig. 2 is a top view, a front view, and a side view of the dust collection apparatus.
Fig. 3 is an exploded perspective view of the dust collection apparatus.
Fig. 4 is a sectional view taken along line A-A of Fig. 2 and a sectional view taken along line B-B of Fig. 2.
Fig. 5 is a sectional view illustrating a state packed with granular filter media.
Fig. 6 is a diagram illustrating the flow of a fluid inside the dust collection apparatus.
Fig. 7 is a diagram illustrating an example of a dust collection system of the present teachings.
Fig. 8 is a diagram illustrating an example of the use of the dust collection apparatus in a pharmaceutical facility or the like.
Fig. 9 is a diagram illustrating an example of the operation of the dust collection system.
Fig. 10 is a diagram illustrating another example of the operation of the dust collection system.
Fig. 11 is a schematic diagram describing packing and discharge of the granular filter media.
Fig. 12 is a schematic view of a pinch valve.
Fig. 13 is a schematic view of a split butterfly valve.
Fig. 14 is a diagram describing an operation of washing the granular filter media.
Fig. 15 is a diagram illustrating a procedure of disassembling the dust collection apparatus.
Fig. 16 is a sectional view of another example of the dust collection apparatus.
Fig. 17 is a principal part exploded perspective view of another example of the dust collection apparatus.

### DESCRIPTION OF EMBODIMENTS

Hereinbelow, an embodiment of the present teachings will be described with reference to the drawings. Identical reference numerals designate identical or corresponding parts throughout the drawings.

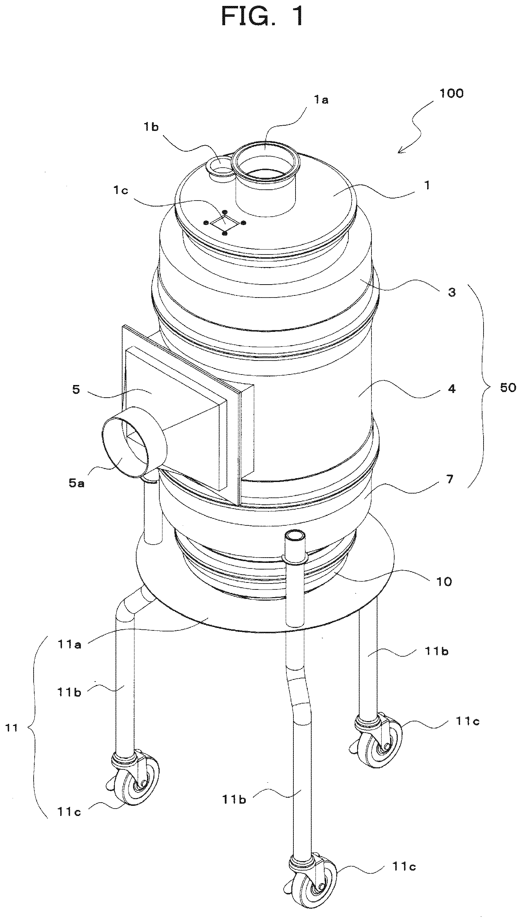

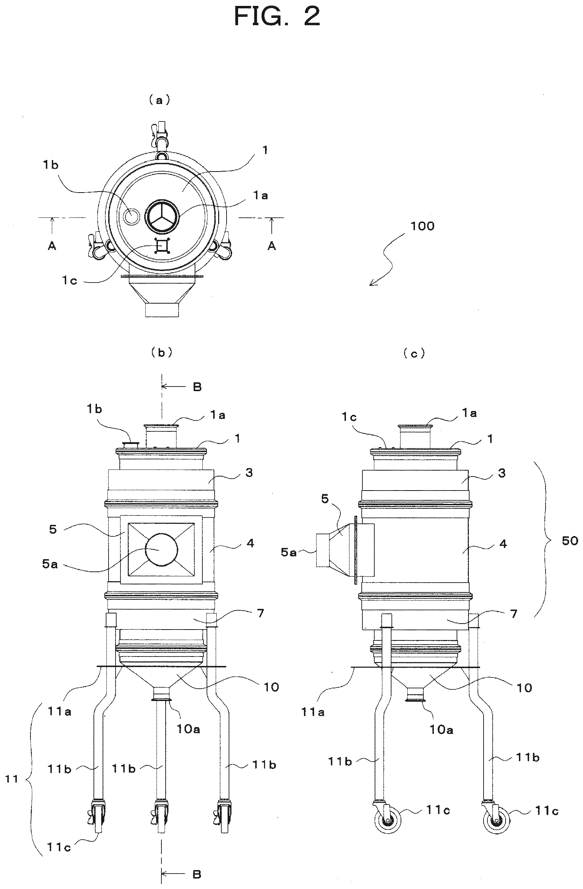

Figs. 1 and 2 illustrate an example of a dust collection apparatus having a local exhaust function (hereinbelow, merely referred to as the "dust collection apparatus") of the present teachings. Fig. 1 is an external view of the entire apparatus. In Fig. 2, (a) is a top view, (b) is a front view, and (c) is a side view. The dust collection apparatus 100 includes a lid 1, an upper housing 3, an intermediate housing 4, a side lid 5, a lower housing 7, a hopper 10, and a base 11. The upper housing 3, the intermediate housing 4, and the lower housing 7 constitute a housing 50. Further, the lid 1, the housing 50, and the hopper 10 constitute a body of the dust collection apparatus 100. Various members (described below) are housed inside the body.

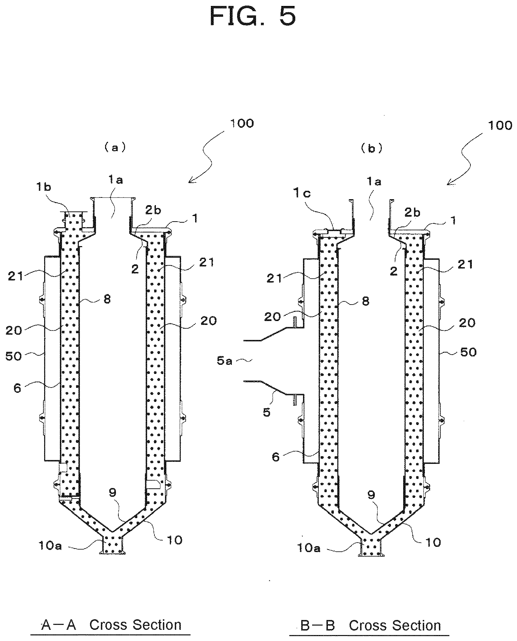

In Figs. 1 and 2, the lid 1 is detachably attached to the upper housing 3 to cover the upper part of the upper housing 3. For example, a ferrule joint having no step or groove on the inner face thereof is used to couple the lid 1 and the upper housing 3. The lid 1 is provided with an intake port 1a for introducing a fluid to be filtered to the inside the housing 50, a charge port 1b for charging granular filter media 21 (Fig. 5) to be packed inside the housing 50, and a check window 1c for checking a packed state of the granular filter media 21. The intake port 1a and the charge port 1b are open on the upper side of the housing 50, and the check window 1c is covered with a transparent glass or resin plate.

Each of the housings 3, 4, 7 includes a cylindrical tubular body with the top and bottom open. The upper housing 3 is detachably coupled to the upper part of the intermediate housing 4, and the lower housing 7 is detachably coupled to the lower part of the intermediate housing 4. For example, the ferrule joint described above is used also in these couplings.

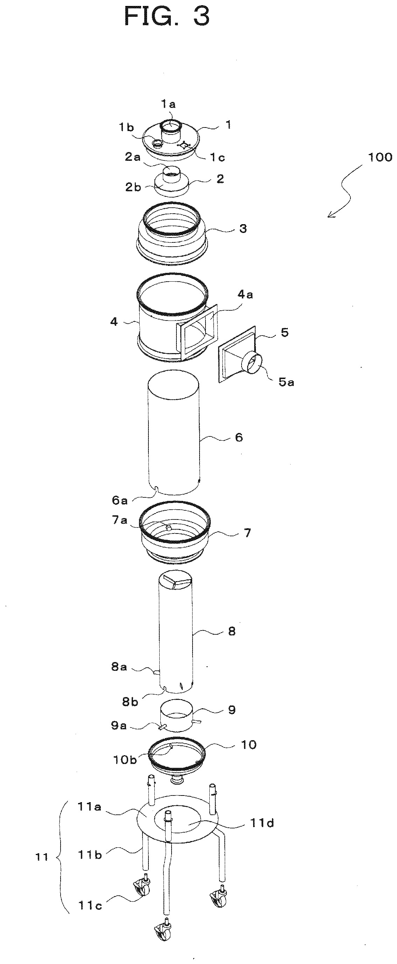

An opening 4a as illustrated in Fig. 3 is formed on the side part of the intermediate housing 4. The side lid 5 is detachably attached to the intermediate housing 4 to cover the opening 4a. A fixing member such as a screw is used to attach the side lid 5. The side lid 5 is provided with an ejection port 5a for ejecting a filtered fluid. The ejection port 5a communicates with the opening 4a. The ejection port 5a is open on the lateral side of the intermediate housing 4.

The hopper 10 is detachably coupled to the lower part of the lower housing 7. For example, the ferrule joint is used also in this coupling. The hopper 10 is provided with a discharge port 10a for discharging the granular filter media 21 inside the housing 50 downward.

The dust collection apparatus body including the housing 50 is mounted on the base 11. The base 11 includes a seat 11a having a discoid shape, a leg 11b which supports the seat 11a, and a caster 11c which is disposed on the lower end of the leg 11b. As illustrated in Fig. 3, a hole 11d is formed on the seat 11a. The hopper 10 is mounted on the seat 11a in a state fitted in the hole 11d. In the present example, three legs 11b are provided, and each of the legs 11b is fixed to the seat 11a. Four (or more) legs 11b may be provided as needed. Since the base 11 includes the caster 11c, the base 11 with the dust collection apparatus body mounted is freely movable.

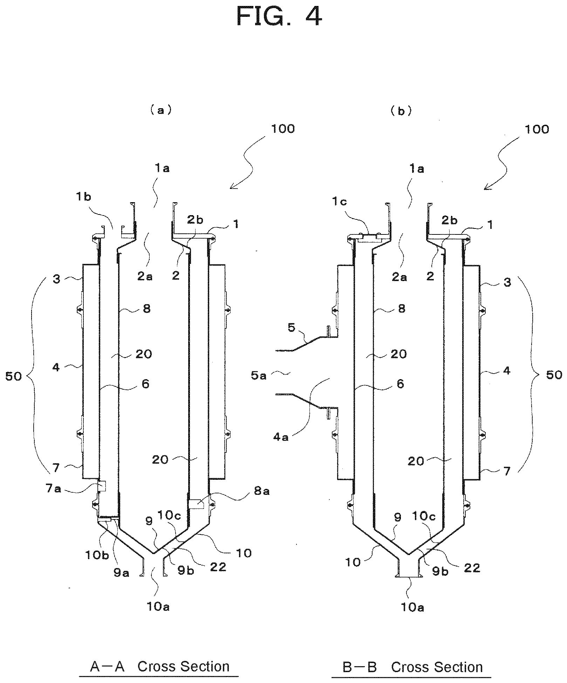

Next, the internal structure of the dust collection apparatus 100 will be described. Fig. 3 is an exploded perspective view of the dust collection apparatus 100. Fig. 4(a) is a sectional view taken along line A-A of Fig. 2(a). Fig. 4(b) is a sectional view taken along line B-B of Fig. 2(b). As illustrated in Figs. 3 and 4, a charge chute 2, an outer tube 6, an inner tube 8, and a discharge chute 9 are housed inside the dust collection apparatus 100. Further, the granular filter media 21 illustrated in Fig. 5 are stored inside the dust collection apparatus 100.

In Fig. 3, the charge chute 2 is a member for guiding the granular filter media 21 charged through the charge port 1b of the lid 1 to a packing space 20 (Fig. 4) between the outer tube 6 and the inner tube 8. As illustrated in Fig. 4, the charge chute 2 is disposed on the upper side of the inner tube 8 and detachably attached to the upper part of the inner tube 8. The charge chute 2 is provided with an opening 2a which communicates with the opening 1a of the lid 1 and a guide slope 2b which is inclined downward.

The outer tube 6 is a cylindrical member with the upper and lower ends open. In the present example, the outer tube 6 is made of a metal or resin net which allows the fluid to be filtered to pass therethrough. The mesh hole diameter of the outer tube 6 is smaller than the outer diameter of the granular filter media 21. A groove 6a is formed on the lower end of the outer tube 6 at a position corresponding to a projection 7a (first support part) which is disposed on the inner face of the lower housing 7. A plurality of grooves 6a and a plurality of projections 7a are provided. Each of the grooves 6a is fitted with a corresponding one of the projections 7a so that the outer tube 6 is detachably supported on the lower housing 7.

The inner tube 8 is a cylindrical member with the upper and lower ends open and has a smaller diameter than the outer tube 6. The inner tube 8 is disposed inside the outer tube 6. Thus, as illustrated in Fig. 4, the packing space 20 for packing the granular filter media 21 (Fig. 5) is formed between the inner tube 8 and the outer tube 6. The central axis of the inner tube 8 coincides with the central axis of the outer tube 6 so that the inner tube 8 and the outer tube 6 are concentrically disposed. As with the outer tube 6, the inner tube 8 is made of a metal or resin net which allows the fluid to be filtered to pass therethrough, and the mesh hole diameter of the inner tube 8 is smaller than the outer diameter of the granular filter media 21. A plurality of spacers 8a and a plurality of grooves 8b are formed on the lower part of the inner tube 8.

The discharge chute 9 is a member for guiding the granular filter media 21 packed in the packing space 20 to the discharge port 10a and disposed on the lower side of the inner tube 8. The discharge chute 9 includes a plurality of projections 9a (second support parts) which are formed at positions corresponding to the respective grooves 8b of the inner tube 8. Each of the grooves 8b is fitted with a corresponding one of the projections 9a so that the inner tube 8 is detachably supported on the discharge chute 9. Further, as illustrated in Fig. 4, the discharge chute 9 is provided with a guide slope 9b which is inclined downward.

The hopper 10 is a member for guiding the granular filter media 21 packed in the packing space 20 to the discharge port 10a together with the discharge chute 9 and disposed on the lower side of the outer tube 6. A plurality of projections 10b (third support parts) are formed on the inner face of the hopper 10 at positions corresponding to the respective projections 9a of the discharge chute 9. Each of the projections 9a is engaged with a corresponding one of the projections 10b from the upper side so that the discharge chute 9 is detachably supported on the hopper 10. Further, as illustrated in Fig. 4, the hopper 10 is provided with a guide slope 10c which is inclined downward. A discharge passage 22, which communicates with the packing space 20 and the discharge port 10a, is formed between the guide slope 9b of the discharge chute 9 and the guide slope 10c of the hopper 10.

In the dust collection apparatus 100 described above, no bolt is used in assembly of each component except the member which covers the check window 1c, the side lid 5, and the caster 11c. Further, in the dust collection apparatus 100 described above, no gasket for sealing is used except in a coupling part (ferrule joint) of each of the housings 3, 4, 7. In this manner, the dust collection apparatus 100 basically has a boltless and gasketless structure and thus has advantages described later.

Next, the filter medium will be described. As illustrated in Fig. 5, the filter medium includes a package of a large number of granular filter media 21. In the present example, for example, glass beads each having a diameter of approximately 1 to 3 mm are used as the granular filter media 21. Although each of the glass beads of the present example is a perfect sphere, the glass bead may be a sphere, other than a perfect sphere, having a predetermined aspect ratio (the ratio between the long diameter and the short diameter). Examples of the glass material include alkali glass, quartz glass, and borosilicate glass. In the present example, borosilicate glass is used because borosilicate glass is more resistant to acid, alkali, and an organic solvent than alkali glass, and also less expensive than quartz glass. Examples of borosilicate glass on the market include Pyrex (registered trademark).

As described above, the granular filter media 21 are charged through the charge port 1b of the lid 1. The granular filter media 21 charged through the charge port 1b flow down to the packing space 20 between the outer tube 6 and the inner tube 8 while being guided by the guide slope 2b of the charge chute 2, so that the granular filter media 21 are packed in the space (Fig. 5). At this time, the packed state of the granular filter media 21 can be visually checked through the check window 1c which is formed on the lid 1. After the packing space 20 is packed with the granular filter media 21, the charge port 1b and the discharge port 10a are closed with lids or valves (not illustrated).

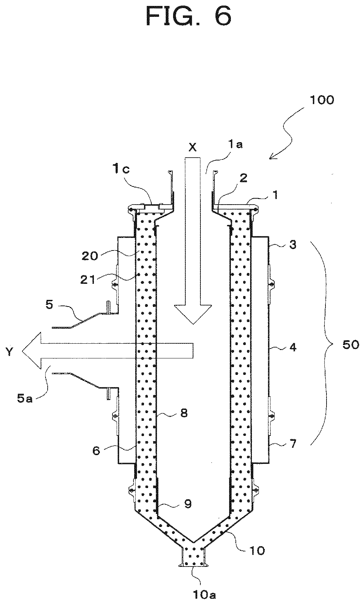

Fig. 6 illustrates the flow of the fluid inside the dust collection apparatus 100. Examples of the fluid to be filtered in a pharmaceutical facility or the like include air containing dust of a highly active pharmaceutical substance and a solvent (vapor) containing a highly active pharmaceutical substance. A fluid X to be filtered introduced through the intake port 1a of the lid 1 flows into an internal space of the inner tube 8, and then passes through the mesh of the inner tube 8 and flows into a packed bed of the granular filter media 21. The fluid X flowing into the packed bed makes contact with the granular filter media 21 while passing through gaps between the granular filter media 21. In the course of this process, the highly active pharmaceutical substance contained in the fluid is collected by the granular filter media 21, and the fluid is thereby filtered. The filtered fluid passes through the mesh of the outer tube 6, and is ejected through the ejection port 5a as a clean fluid Y containing no highly active pharmaceutical substance.

As shown in Fig. 6, the flow of the fluid inside the dust collection apparatus travels from the narrow inner side toward the wide outer side. Thus, the velocity of flow of the fluid decreases as the fluid approaches the outer side. Further, in the dust collection apparatus 100 of the present embodiment, the collection efficiency increases as the velocity of flow decreases. Thus, the highly active pharmaceutical substance contained in the fluid passing through the granular filter media 21 at a low velocity can be efficiently collected by the granular filter media 21.

An advantage in using the granular filter media 21 is that the maximum air flow rate can be set larger than that of a bag filter. As an example, when the bag filter is used, the face velocity is 1 to 2.5 m/min. On the other hand, when the granular filter media 21 are used, the face velocity can be raised up to approximately 30 to 60 m/min. Thus, the dust collection apparatus 100 having a larger air flow rate than a bag filter dust collection apparatus can be achieved.

Further, in the case of the bag filter, it is necessary to completely dry the bag filter when it gets wet. It is impossible to use the wet bag filter. On the other hand, it is not necessary to dry the granular filter media 21 even when it gets wet. The wet granular filter media 21 can collect dust, and thus can also collect dust from a fluid containing the liquid droplets (mist). Therefore, the dust collection apparatus 100 can be used as a mist collector. In this manner, since the granular filter media 21 in a wet state can collect dust, it is possible to largely reduce the risk of exposure caused by flying dry powder as compared to the bag filter which is limited to dry type dust collection.

Although the granular filter media 21 made of borosilicate glass are used in the present example, the granular filter media 21 made of a gas adsorption material such as silica gel or activated carbon may be used. In this case, in addition to the dust collecting effect, it is possible to reduce the concentration of a toxic substance in the fluid and reduce an offensive smell. Thus, in a site where there is a risk of exposure to powder and a solvent atmosphere is also present, the single dust collection apparatus 100 can cope with the risk by making use of its small and mobile characteristics.

Further, when the granular filter media 21 are immersed in a sodium hydroxide solution, the surfaces of the granular filter media 21 are constantly wet due to deliquescence of sodium hydroxide. Accordingly, the dust trapping capacity is improved, and acidic gas can also be adsorbed.

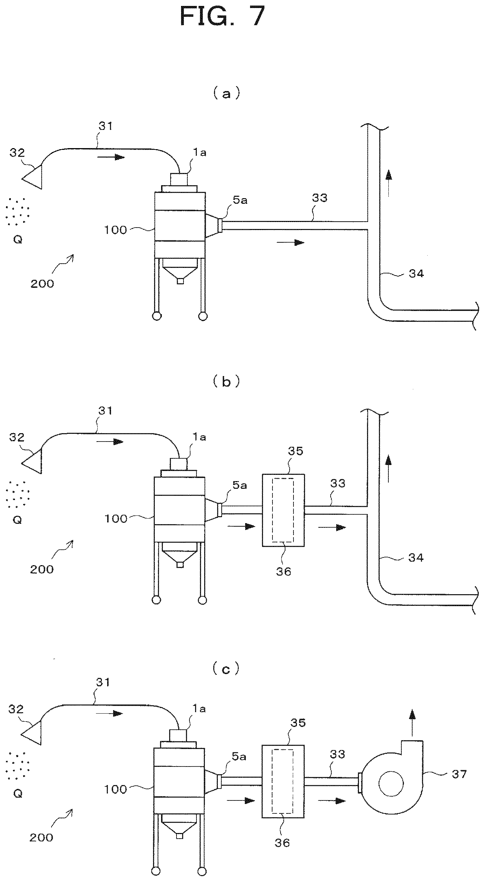

Next, a dust collection/exhaust system using the dust collection apparatus 100 described above will be described. Fig. 7 illustrates an example of the dust collection/exhaust system according to the present teachings. The dust collection/exhaust system 200 includes the dust collection apparatus 100 described above, a flexible suction duct 31 having one end connected to the intake port 1a of the dust collection apparatus 100, a suction hood 32 which is connected to the other end of the suction duct 31, and exhaust means such as ducts 33, 34 or a fan 37 for exhausting a fluid which has been sucked through the suction hood 32 and from which dust has been removed by the dust collection apparatus 100.

The dust collection apparatus 100 is installed, for example, in a work site such as a pharmaceutical facility where a highly active pharmaceutical substance is handled. Dust Q of the highly active pharmaceutical substance generated during an operation is sucked into the suction hood 32, taken into the inside of the dust collection apparatus 100 through the suction duct 31, and collected by the granular filter media 21. Air from which the dust Q has been removed is ejected through the ejection port 5a and then exhausted through the exhaust duct 33 which is connected to the ejection port 5a.

In an example of Fig. 7(a), the ejection port 5a of the dust collection apparatus 100 is directly connected to the existing local exhaust duct 34 through the exhaust duct 33. Thus, the air ejected through the ejection port 5a is exhausted to the outside of the work site or the outside of the facility through the local exhaust duct 34. In this manner, by using a local exhaust system in the facility as a suction source, the dust collection apparatus 100 and the dust collection/exhaust system 200 installed in the site need no explosion-proof electric instrument. Thus, the dust collection apparatus 100 and the dust collection/exhaust system 200 can be used in a hazard area having a higher risk.

In an example of Fig. 7(b), the ejection port 5a of the dust collection apparatus 100 is connected to the local exhaust duct 34 through a filter device 35 and the exhaust duct 33. For example, a high efficiency particulate air filter (HEPA filter) 36 is incorporated in the filter device 35. Thus, even if a very small amount of dust remains in air ejected through the ejection port 5a, approximately 100% of the dust is removed by the HEPA filter 36 having a high collection efficiency. Although only one HEPA filter 36 is provided in the present example, a plurality of HEPA filters 36 may be provided. Further, the HEPA filter 36 may be disposed on the body of the dust collection apparatus 100. Further, ultra-low penetration air filter (ULPA filter) having a higher efficiency may be used instead of the HEPA filter 36. These alternatives also apply to an example of Fig. 7(c) described next.

In the example of Fig. 7(c), the ejection port 5a of the dust collection apparatus 100 is connected to the fan 37 through the filter device 35 and the exhaust duct 33. Thus, air ejected through the ejection port 5a passes through the filter device 35 and the exhaust duct 33, and is exhausted from the fan 37. The air exhausted from the fan 37 may be discharged to the outside through an existing duct or may be directly exhausted to the work site. As described above, approximately 100% of dust has been removed from the air that has passed through the HEPA filter 36, and the air exhausted from the fan 37 thus contains little harmful dust affecting the human body. Therefore, directly exhausting the air into the room from the fan 37 is allowed. In a case where a gas component other than dust is contained in an air current, it is possible to make a design in which a scrubber (scrubbing dust collector) in the facility treats the gas, by exhausting the air near the local exhaust device. In a case where the fan 37 is an explosion-proof fan, the fan 37 can also be used in an explosion-proof area.

Combining the dust collection apparatus 100 with the existing local exhaust duct 34 as illustrated in Figs. 7(a), (b) eliminates the necessity of a fan attached to the dust collection apparatus 100. Thus, the system configuration is simplified, and the system can also be used in an explosion-proof area due to the nonexistence of an electric system.

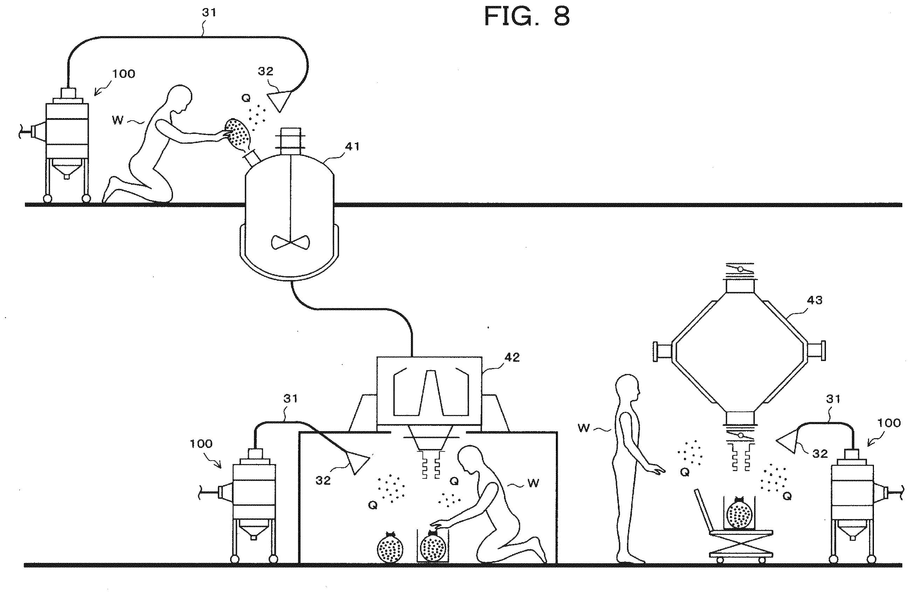

Fig. 8 illustrates an example of the use of the dust collection apparatus 100 in a pharmaceutical facility or the like. Specifically, Fig. 8 illustrates an example of a manufacturing site of a highly active pharmaceutical product. In such a site, when a raw material is charged through a charge port of a tank (reactor) 41, when a product is discharged from a centrifuge 42, or when a product is discharged from a dryer 43, there is a risk of exposing a worker W to flying dust Q of a highly active pharmaceutical substance. However, by installing the dust collection apparatus 100 in each work site, it possible to avoid such a risk of exposure to protect the worker W from a health impairment, and also efficiently prevent the highly active pharmaceutical substance from mixing into another process or diffusing to the outside. Further, the dust collection apparatus 100 is capable of collecting and removing not only the dust Q generated from the raw material or the product, but also, for example, the highly active pharmaceutical substance contained in vapor (solvent) generated in the tank 41 with the granular filter media 21.

Further, the dust collection apparatus 100 includes the movable base 11 (Fig. 1). Thus, the dust collection apparatus 100 can be easily moved to a work site where measures against exposure are required. Examples of the place where measures against exposure are required include, in addition to each work site illustrated in Fig. 8, a site where a raw material weighing operation is performed, a work site where a screen classifier is installed and dust is substantially likely to be generated, and a dressing room where a worker takes off his or her cloths with dust adhered.

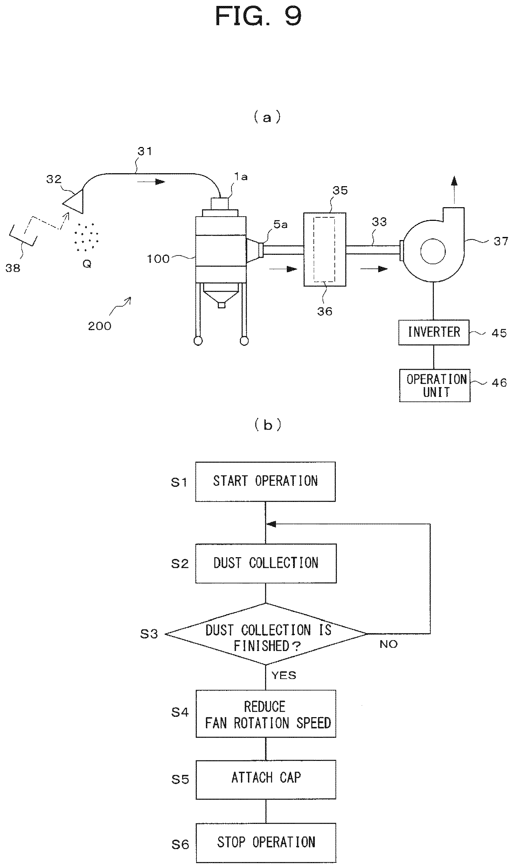

Fig. 9 illustrates an example of the operation of the dust collection/exhaust system 200. Fig. 9 illustrates an example of the system of Fig. 7(c). In Fig. 9(a), an inverter 45 which controls the rotation speed of the fan 37 and an operation unit 46 for operating the inverter 45 are attached to the fan 37. The inverter 45 and the operation unit 46 may be disposed near the fan 37 or may be disposed in a place distant from the fan 37. Further, a cap 38 which closes the suction port is attached to the suction hood 32.

When the operation of the dust collection/exhaust system 200 is immediately stopped (the fan 37 is stopped) at the point when the suction of the dust Q by the suction hood 32 is finished, there is a possibility that dust remaining inside the suction duct 31 flies or falls from the suction hood 32 in a period between when the dust collection/exhaust system 200 is stopped and when the suction hood 32 is covered with the cap 38, and a worker is exposed to the dust. Thus, in the system of Fig. 9(a), the rotation speed of the fan 37 is reduced by the inverter 45 before stopping the operation of the dust collection/exhaust system 200, then the operation of the dust collection/exhaust system 200 is stopped. Fig. 9(b) is a flowchart illustrating the procedure thereof.

In Fig. 9(b), when the inverter 45 is driven by an operation of the operation unit 46, and the fan 37 is rotated to start the operation of the dust collection/exhaust system 200 (step S1), the dust Q is sucked through the suction hood 32, and the sucked dust is collected by the dust collection apparatus 100 through the suction duct 31 (step S2). When the dust collection is finished (step S3), the operation unit 46 is operated to reduce the rotation speed of the fan 37 to, for example, 50% or less of the rotation speed in operation by the inverter 45 (step S4). In response to this, the suction force of the suction hood 32 is also reduced. The reduction of the rotation speed of the fan 37 is continued for a certain time, and, during this, the suction hood 32 and the suction duct 31 are maintained in a sucking state though the suction force is weak. Thus, dust remaining inside the suction duct 31 does not fly or fall from the suction hood 32. Then, while the fan 37 rotates at a low speed, the cap 38 is attached to the suction hood 32 (step S5). Then, at the point when the certain time has passed, the rotation of the fan 37 comes to a stop, and the operation of the dust collection/exhaust system 200 is stopped (step S6). In this manner, exposure by dust remaining inside the suction hood 32 can be prevented.

In reducing the rotation speed of the fan 37, a method other than operating the operation unit 46 can be considered. For example, a method as described below may be employed. A sensor (not illustrated) is disposed on the suction hood 32. When the cap 38 approaches the suction hood 32, the sensor detects the approaching cap 38, and the rotation speed of the fan 37 is automatically reduced. When the cap 38 is attached to the suction hood 32, the fan 37 comes to a stop.

Further, a damper (not illustrated) may be disposed between the fan 37 and the dust collection apparatus 100, and the suction force of the suction hood 32 may be reduced by limiting the air flow rate by the damper without reducing the rotation speed of the fan 37. In this case, an orifice may further be provided in addition to the damper. The combined use with the orifice enables an air suction passage to be secured by the orifice even when the damper is completely closed. Thus, there is an advantage that opening and closing control of the damper is simplified.

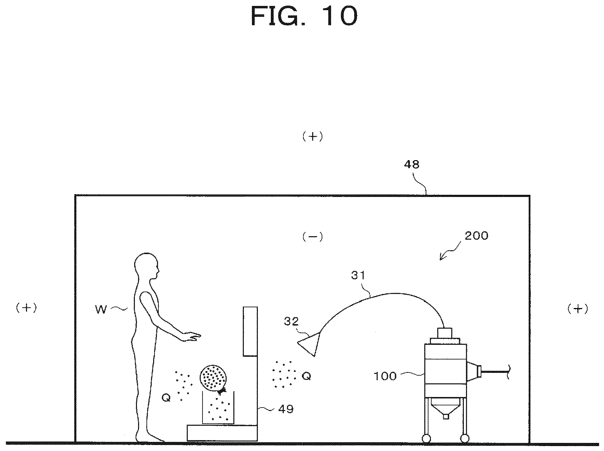

Fig. 10 illustrates another example of the operation the dust collection/exhaust system 200. In this example, a booth 48 is set in a site of an operation of weighing a highly active pharmaceutical substance. The dust collection apparatus 100 is installed together with the suction duct 31 and the suction hood 32 inside the booth 48. The suction hood 32 should be disposed inside the booth 48. On the other hand, the dust collection apparatus 100 may be disposed outside the booth 48 when the risk of contamination caused by flying dust is high.

The booth 48 includes six faces, and the inside thereof is substantially a closed space. A weigher 49 is installed inside the booth 48. A worker W performs the operation of weighing the highly active pharmaceutical substance using the weigher 49. Dust Q generated during the operation is sucked through the suction hood 32, and air inside the booth 48 is also sucked at the same time. Thus, an internal space of the booth 48 is brought into a negative pressure state having a lower air pressure than the outside. Accordingly, it is possible to prevent the dust Q inside the booth 48 from leaking and flying to the outside through a gap of the booth 48 or the like.

Further, the booth 48 may be made of a flexible material as a temporary booth which can be assembled in a work site. Since such a simplified temporary booth can be freely installed in any place, a negative pressure environment can be easily constructed without changing the present condition of the work site.

Next, operations of packing and discharging the granular filter media 21 in the dust collection apparatus 100 will be described.

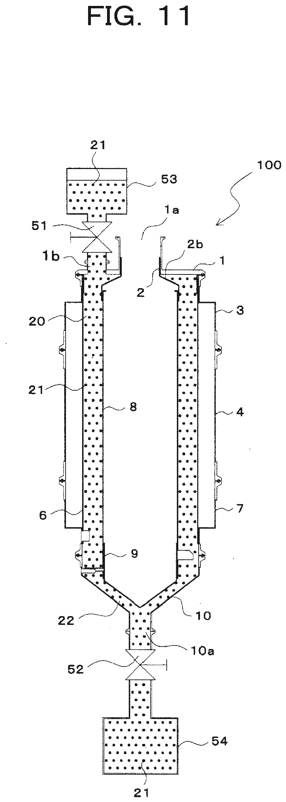

Fig. 11 is a schematic diagram describing these operations. When the granular filter media 21 are packed, a supply box 53 in which the granular filter media 21 are stored is disposed on the upper side of the charge port 1b with a first valve 51 interposed therebetween. The first valve 51 is basically disposed on the dust collection apparatus 100 side in order to prevent leakage of dust from the apparatus body and ensure sufficient airtightness of the apparatus body. The granular filter media 21 inside the supply box 53 fall downward through the charge port 1b by opening the first valve 51, and are packed into the packing space 20 between the outer tube 6 and the inner tube 8.

Further, when the granular filter media 21 which have become dirty due to repetitive filtration are taken out for replacement or washing, a collection box 54 into which the granular filter media 21 are collected is disposed on the lower side of the discharge port 10a with a second valve 52 interposed therebetween. The second valve 52 is also basically disposed on the dust collection apparatus 100 side in order to prevent leakage of dust from the apparatus body and ensure sufficient airtightness of the apparatus body. The granular filter media 21 inside the packing space 20 fall downward through the discharge passage 22 and the discharge port 10a by opening the second valve 52, and are collected into the collection box 54. At this time, a path from the discharge port 10a to the collection box 54 through the second valve 52 is a closed space. Therefore, dust adhering to the granular filter media 21 does not fly during the discharge of the granular filter media 21, which makes it possible to prevent a worker from being exposed to the dust.

The granular filter media 21 collected in the collection box 54 may be discarded, but can also be reused. In the case of reuse, the collected granular filter media 21 are transferred to another place and washed, then dried, and charged through the charge port 1b and packed inside again. In this manner, by washing and reusing the granular filter media 21, the dust collection apparatus 100 can be an environmentally friendly apparatus which gives consideration to the global environment.

In the present example, out of the first and second valves 51, 52, a sanitary valve having no or minimum pockets in a place that makes contact with the discharged granular filter media 21 is used as at least the second valve 52. For example, a commercially available valve such as a pocket-less valve, a pinch valve, or a sanitary butterfly valve is used as the sanitary valve. Further, in view of reducing the risk of exposure, a split butterfly valve having an excellent containment performance can be used.

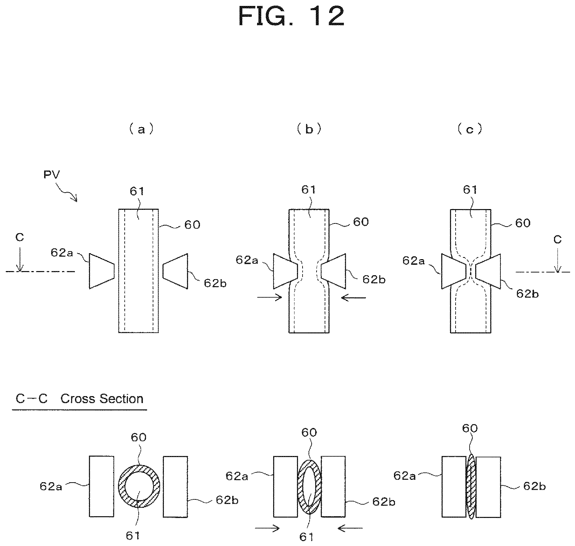

Fig. 12 is a schematic view of the pinch valve. The pinch valve PV includes a hollow tube 60 which is made of an elastic material such as silicon rubber and a pair of pressing members 62a, 62b which presses the tube 60 from both sides. The pressing members 62a, 62b are driven by an actuator (not illustrated). Fig. 12(a) illustrates a state in which the pressing member 62a, 62b do not press the tube 60. In this state, a passage 61 of the tube 60 is open so that a fluid (not illustrated) can pass through the passage 61. In order to interrupt the passage of the fluid, the pressing members 62a, 62b are moved in a direction indicated by arrows as illustrated in Fig. 12(b). Accordingly, the tube 60 is pressed from both sides by the pressing members 62a, 62b, which narrows the passage 61. The tube 60 is flattened by the pressing members 62a, 62b in the end as illustrated in Fig. 12(c) to completely close the passage 61, and the passage of the fluid is interrupted. The passage of the fluid is resumed following a reverse procedure.

The pinch valve PV as described above has no pocket such as a groove, a recess, or a step on the inner wall of the passage 61, namely in a place that makes contact with the fluid. Thus, when the pinch valve PV is used as the second valve 52 of Fig. 11, the granular filter media 21 do not remain in the place of the second valve 52 during the discharge of the granular filter media 21, and the granular filter media 21 inside the body can be smoothly discharged. The pinch valve PV can also be used as the first valve 51.

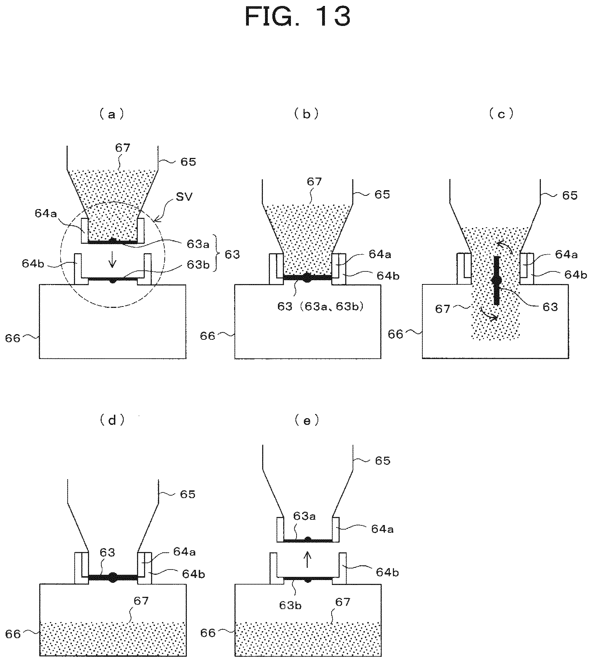

Fig. 13 is a schematic view of the split butterfly valve. The split butterfly valve SV includes a pair of half valves which can be separated and coupled. One of the half valves includes a disk 63a and a tubular body 64a which supports the disk 63a, and is attached to, for example, an opening of a hopper 65. For example, powder 67 is stored inside the hopper 65. The other half valve includes a disk 63b and a tubular body 64b which supports the disk 63b, and is attached to, for example, an opening of a storage box 66.

In Fig. 13, in a state as illustrated in (a) where the upper and lower half valves are separated from each other, the tubular bodies 64a, 64b are respectively closed with the disks 63a, 63b. In this state, when the upper half valve moves down, the tubular bodies 64a, 64b are coupled together as illustrated in (b). At this time, the disks 63a, 63b are also coupled together to constitute a rotary valve 63. Then, when the rotary valve 63 rotates by 90° as illustrated in (c), the hopper 65 and the storage box 66 communicate with each other, and the powder 67 inside the hopper 65 is supplied into the storage box 66. When the supply is finished, the rotary valve 63 returns to the original position as illustrated in (d). Then, as illustrated in (e), the upper half valve moves up, so that the tubular body 64a and the tubular body 64b are separated from each other, and the disk 63a and the disk 63b are separated from each other. In this manner, the powder 67 in a contained state can be transferred from the hopper 65 to the storage box 66.

The split butterfly valve SV as described above is also designed to have few pockets in the place that makes contact with the powder 67. Thus, when the split butterfly valve SV is used as the second valve 52 of Fig. 11, the granular filter media 21 do not remain in the place of the second valve 52 during the discharge of the granular filter media 21, and the granular filter media 21 inside the body can be smoothly discharged. The split butterfly valve SV can also be used as the first valve 51.

Next, an operation of washing the granular filter media 21 in the dust collection apparatus 100 will be described.

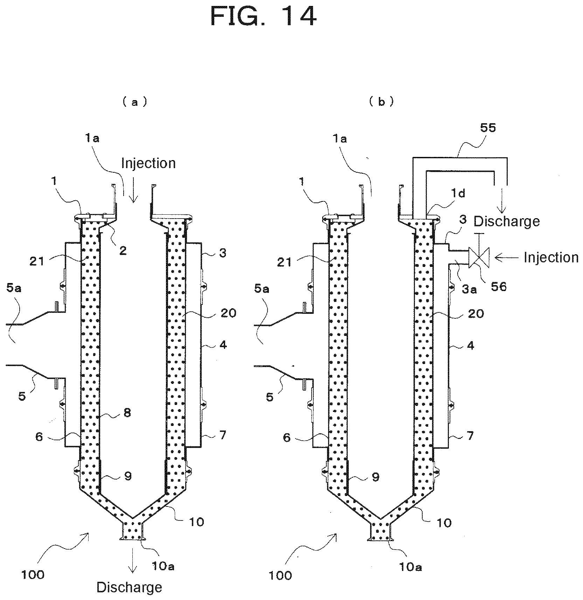

Fig. 14(a) is a diagram describing the operation of washing the granular filter media 21. The granular filter media 21 which have become dirty due to filtration can be washed after being collected into the collection box 54 as described above with reference to Fig. 11. Alternatively, the granular filter media 21 may be washed in a packed state in the packing space 20. As a washing liquid, water, hot water, an organic solvent, an acid or alkali solution or the like can be used.

In the washing, as illustrated in Fig. 14(a), the washing liquid is injected through the intake port 1a of the lid 1. At this time, the ejection port 5a is maintained in a closed state. Further, a mesh member (not illustrated) which does not allow the granular filter media 21 to pass therethrough is attached to the discharge port 10a so that only the washing liquid flows out. Then, the washing liquid is continuously injected through the intake port 1a with the granular filter media 21 left inside.

The washing liquid injected through the intake port 1a passes through the inner tube 8 and flows into the packing space 20 packed with the granular filter media 21, flows through gaps between the granular filter media 21, washes dust adhering to the granular filter media 21 away, and then flows out through the discharge port 10a. Since dust is contained in waste water flowing out through the discharge port 10a, it is desired to connect a drain pipe (not illustrated) to the discharge port 10a to feed the waste water in a contained state to a tank or the like.

Although the washing liquid is injected through the intake port 1a in Fig. 14(a), the washing liquid may be injected through the charge port 1b illustrated in Fig. 1 and the like. Further, although the washing liquid is discharged through the discharge port 10a in Fig. 14(a), a drain port for discharging the washing liquid may be provided separately from the discharge port 10a. Alternatively, the washing liquid may be discharged through the ejection port 5a.

Washing the granular filter media 21 remaining in a packed state as illustrated in Fig. 14(a) enables the granular filter media 21 to be washed without being taken out to the outside. Thus, it is possible to efficiently prevent exposure to the highly active pharmaceutical substance adhering to the granular filter media 21 in the washing operation.

When the necessity of discharging the granular filter media 21 arises, the mesh member is detached after the washing of the filter media (or wet-down described next) is finished. At this time, the granular filter media 21 discharged through the discharge port 10a and the detached mesh member are both in a wet state by the washing liquid. Thus, in replacement of the granular filter media 21 and the mesh member, it is possible to prevent or reduce the flying of the highly active pharmaceutical substance adhering to the granular filter media 21 and the mesh member to reduce the risk of exposure.

The above description relates to the washing of the granular filter media 21. Further, wet-down for discharging the granular filter media 21 in a wet state may also be performed in Fig. 14(a). In the wet-down, it is not necessary to completely wash the granular filter media 21 (to completely remove powder or the like) by passing water. The risk of exposure through a breathing route can be reduced by injecting a certain amount of water through the intake port 1a to fill the inside to the brim with water with the discharge port 10a closed and the granular filter media 21 packed inside. When the discharge port 10a is opened in this fully water filled state, the granular filter media 21 inside are discharged through the discharge port 10a. However, at this time, the granular filter media 21 are in a wet state. Thus, the flying of the highly active pharmaceutical substance adhering to the granular filter media 21 is prevented or reduced, and the exposure can be prevented. However, a liquid discharged together with the granular filter media 21 contains the highly active pharmaceutical substance. Therefore, it is important to wear a protector such as gloves in order to prevent the highly active pharmaceutical substance from being absorbed through the skin and thoroughly perform a floor wiping operation in order to prevent the re-flying of the highly active pharmaceutical substance caused by drying of the liquid spilled on the floor.

Fig. 14(b) illustrates another embodiment. The upper housing 3 is provided with a water injection port 3a, and a water injection valve 56 is attached to the water injection port 3a. Further, an opening 1d which communicates with the packing space 20 is formed on the lid 1, and a drain pipe 55 is connected to the opening 1d. When the wet-down is performed, water is injected through the intake port 1a in Fig. 14(a). On the other hand, in Fig. 14(b), the water injection valve 56 is opened with the discharge port 10a closed to inject water through the water injection port 3a. After the injection of water, water flows out through the drain pipe 55 when the inside is filled to the brim with water. Accordingly, a full-water condition can be checked.

In Fig. 14(b), not only the wet-down as described above, but also washing of the granular filter media 21 can be performed. In this case, a washing liquid is continuously injected through the water injection port 3a with the discharge port 10a closed to perform the washing while discharging waste water through the drain pipe 55. In this case, the waste water can be reliably discharged through the drain pipe 55 by pressure-feeding the washing liquid. In Fig. 14(b), water may be continuously injected through the intake port 1a by pressure-feeding and discharged through the drain pipe 55 to wash the granular filter media 21 without providing the water injection port 3a and the water injection valve 56. Further, the drain pipe 55 may be connected to the charge port 1b illustrated in Fig. 1 and the like without forming the opening 1d on the lid 1.

At last, operations of disassembling and assembling the dust collection apparatus 100 will be described.

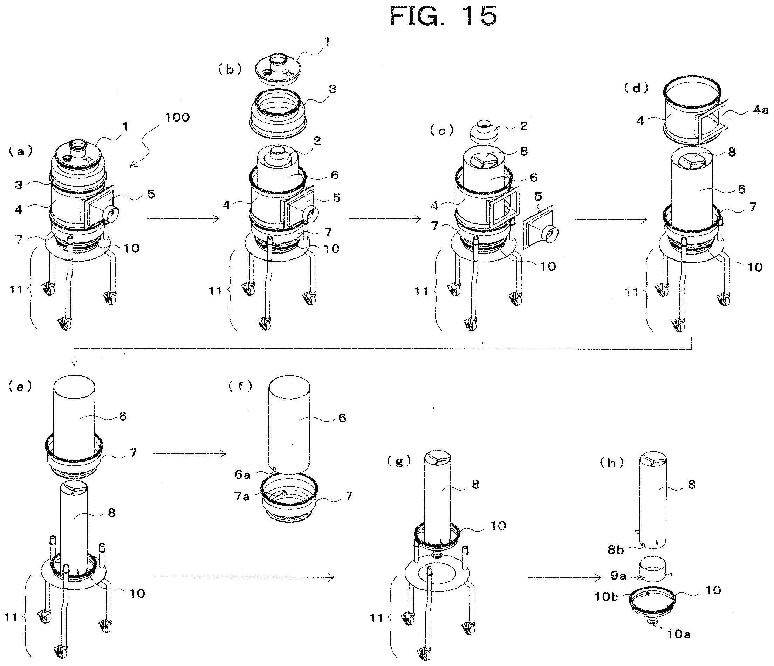

Fig. 15 illustrates a procedure of disassembling the dust collection apparatus 100. In Fig. 15, (a) illustrates the dust collection apparatus 100 after assembly. Each component of the dust collection apparatus 100 is washed or replaced following steps of (b) to (h).

First, as illustrated in (b), the lid 1 is detached from the upper housing 3, and the upper housing 3 is detached from the intermediate housing 4. Then, as illustrated in (c), the charge chute 2 is detached from the inner tube 8, and the side lid 5 is detached from the intermediate housing 4. Then, as illustrated in (d), the intermediate housing 4 is detached from the lower housing 7. Further, as illustrated in (e), the lower housing 7 is detached from the hopper 10 in a state of supporting the outer tube 6. Then, as illustrated in (f), the outer tube 6 and the lower housing 7 are separated from each other. Further, as illustrated in (g), the hopper 10 is detached from the base 11 in a state of supporting the inner tube 8. Then, as illustrated in (h), the inner tube 8, the discharge chute 9, and the hopper 10 are separated from each other. Accordingly, the operation of disassembling the dust collection apparatus 100 is completed. The disassembled components are assembled following a reverse procedure.

The embodiment described above can obtain various effects as described below.

### (1) Exposure Prevention

In the present embodiment, the dust collection apparatus 100 uses not a bag filter, but the granular filter media 21 (glass beads) as the filter medium. It is not necessary for the granular filter media 21 to be washed or replaced in an open state like the bag filter, and the washing and replacement operations can be performed in a sealed state (Fig. 11, Fig. 14). Thus, the dust collection apparatus 100 according to the present embodiment largely reduces the risk of exposure as compared to a bag filter dust collection apparatus. In particular, in a pharmaceutical facility or the like, the dust collection apparatus 100 protects a worker from exposure to a highly active pharmaceutical substance, thereby contributing to establishing industrial safety and health.

### (2) Downsizing and Lightening

The dust collection apparatus 100 according to the present embodiment has an extremely simple structure provided with the outer tube 6 disposed inside the housing 50, the inner tube 8 disposed inside the outer tube 6, the packing space 20 formed between the outer tube 6 and the inner tube 8, and the charge port 1b and the discharge port 10a for charging and discharging the granular filter media 21 to be packed in the packing space 20 (Fig, 4, Fig. 5). Thus, a large filter and a brush-off mechanism in the bag filter dust collection apparatus are not required, and the granular filter media 21 can ensure a larger face velocity than the bag filter. Accordingly, when a comparison is made with the same air flow rate, the entire apparatus can be made small and lightweight as compared to the bag filter dust collection apparatus.

### (3) Transportability

The conventional bag filter dust collection apparatus is large and lacks transportability. On the other hand, the dust collection apparatus 100 according to the present embodiment is small and lightweight, and thus can be freely moved to any place by mounting the apparatus body on the base 11 having the caster 11c. Accordingly, in a pharmaceutical facility or the like, the dust collection apparatus 100 can be installed near a device that handles a highly active pharmaceutical substance to collect generated dust on the spot (Fig. 8).

### (4) Mixing and Dispersion Prevention

In the dust collection/exhaust system 200 according to the present embodiment, the dust Q of the highly active pharmaceutical substance is contained between the suction hood 32 and the dust collection apparatus 100 (or the filter device 35). Thus, it is possible to prevent the worker W from being exposed to the dust Q during the operation and prevent the dust Q from mixing into another process or dispersing to the outside. Further, it is also possible to prevent the secondary flying of dust caused by the dust Q entering and remaining in the local exhaust duct or the like laid inside the facility.

### (5) Maintainability

In the dust collection apparatus 100 according to the present embodiment, the charge chute 2 is detachably attached to the upper part of the inner tube 8, the outer tube 6 is detachably supported on the lower housing 7 with the projections 7a, the inner tube 8 is detachably supported on the discharge chute 9 with the projections 9a, and the discharge chute 9 is detachably supported on the hopper 10 with the projections 10b. Further, the upper housing 3 and the intermediate housing 4 are detachably coupled together with the ferrule joint or the like, and the intermediate housing 4 and the lower housing 7 are detachably coupled together with the ferrule joint or the like. Further, the boltless structure and the gasketless structure as described above are achieved by taking the advantage obtained by using the granular filter media 21 as the filter medium.

As illustrated in Fig. 15, the boltless structure makes it possible to easily separate the components in the disassembly of the dust collection apparatus 100 and easily assemble the components in the assembly of the dust collection apparatus 100. Accordingly, the dust collection apparatus 100 can be easily disassembled and washed, and also easily assembled after the washing. In particular, combined with the boltless structure, the dust collection apparatus 100 of the present embodiment has a simple internal structure and includes no complicated structure inside the apparatus (Fig. 4). Thus, the dust collection apparatus 100 has excellent washability. This results in avoiding the risk of secondary flying and mixing into the next process of the highly active pharmaceutical substance. Further, since there is no place where liquid is gathered inside the apparatus, it is possible to prevent the washing liquid from remaining inside the apparatus. In addition, since the number of components is small, and there is no consumable component such as a gasket inside the apparatus, the frequency of component replacement is reduced.

Further, the employment of the gasketless structure can solve the problem of unreliability in sealing in the conventional bag filter dust collection apparatus, specifically, as follows. In the bag filter dust collection apparatus, a gasket is disposed between a housing and a filter to prevent a dusty air current from leaking out of the housing (e.g., refer to the gasket 33 in Patent Literature 8). A fine gap may be formed between the housing and the filter due to aged deterioration of the gasket, and the dusty air current may leak through the gap. However, it is not easy to check the gap. Further, even immediately after the replacement of the gasket, the sealability may be reduced due to powder caught in the gasket. However, it is also not easy to check the powder caught in the gasket. Thus, since the gasket is an essential component in the bag filter dust collection apparatus, the bag filter dust collection apparatus always has the problem that reliable sealing is not ensured, namely the problem of unreliability in sealing.

On the other hand, in the dust collection apparatus 100 of the present embodiment, the granular filter media 21 packed inside the apparatus eliminates the necessity of a gasket for preventing leakage of an air current, for example, between the lid 1, the upper housing 3, and the outer tube 6. Even if the air current leaks, since the air current filtered by the granular filter media 21 is clean, no problem arises. In this manner, the present embodiment employing the gasketless structure can not only reduce consumable components and facilitate washing, but also solve the problem of unreliability in sealing which is a critical defect of the bag filter dust collection apparatus. In the present embodiment, even if a gasket is used in the place described above and a gap is formed due to deterioration of the gasket or the like, the inside of the apparatus is in a negative pressure, and merely outside air is inhaled. Therefore, no pollution problem arises.

### (6) Washing Evaluation

The dust collection apparatus 100 of the present embodiment has a simple internal structure and can be disassembled into easily washable component units as described above, and thus has an advantage that an evaluation of washing can be easily performed. For example, in a swab (wiping) inspection, there is no part that is difficult to wipe, such as a bolt or a projection, and all places are within the reach and can be thoroughly wiped off. Thus, the washing evaluation can be easily and accurately performed.

### (7) Response to Risk Assessment

The revised Industrial Safety and Health Law, which came into effect on June 1, 2016, obliges all workplaces where specific chemical substances (640 substances) are manufactured or handled to perform a risk assessment (investigation of risk and toxicity), and demands necessary measures based on a result of the risk assessment (article 57-3). The dust collection apparatus 100 of the present embodiment has not only a function of collecting dust in the air, but also filtering a solvent (vapor) containing a toxic substance. Thus, in a manufacturing site where measures against both dust collection and solvent filtration are required, the single dust collection apparatus 100 can cope with both the dust collection and the solvent filtration. Consequently, the dust collection apparatus 100 is effective as a specific solution to the risk assessment.

### (8) Consideration to Global Environment

In the present embodiment, the recyclable and environmentally friendly dust collection apparatus 100 can be achieved by washing and reusing the granular filter media 21 as described above. Further, a bag filter and an internal gasket, which is a consumable component, are not used. Thus, it is possible to minimize waste of these components to reduce energy required for a waste treatment and contribute to preventing global warming by reduction of carbon dioxide.

The present teachings can employ various embodiments as described below in addition to the above embodiment.

Although the glass beads are used as the filter medium in the above embodiment, the material and the shape of the filter medium used in the present teachings can be selected in any manner according to the purpose and use. For example, resin pellets may be used instead of the glass beads. Such resin pellets are less expensive than glass, and thus suitable for a case where the resin pellets are not reused but discarded after one use. In this respect, they are easy to handle. It is needless to say that the resin pellets may be reused after being washed and dried in the same manner as the glass beads. The material of the resin pellets is not particularly limited to any material. However, for example, it has been confirmed from a performance test carried out by the inventors that a package of pellets made of polyethylene resin (PE resin pellets) has a higher performance as the filter medium than the package of the glass beads.

In the above embodiment, each of the granular filter media 21 is a sphere. However, the shape of each of the granular filter media 21 is not limited to a sphere, and may be, for example, an ellipsoid, a polyhedron, a cylinder, or a prism. Further, the size of each of the granular filter media 21 can be selected in any manner according to the intended use. Further, the filter medium used in the present teachings is not limited to the granular filter medium, and may be a filter medium of indefinite shape having no definite shape, for example, a chip-shaped filter medium formed by cutting metal, a resin, or a fiber into random small pieces or a filter medium made of a ground product of an ore. Further, in order to further improve the collection performance, granular filter media and filter media of indefinite shape may be mixed within the bounds of not losing the flowability of the filter medium, and the thus-obtained mixture may be used as the filter medium.

In the above embodiment, borosilicate glass is used as the material of the granular filter media 21. Alternatively, alkali glass or quartz glass may be used or a resin may be used instead of glass. Further, when a material having a gas adsorption property is used, for example, zeolite can also be used in addition to silica gel and activated carbon described above. Further, a filter medium of glass or a resin whose surface is coated with a gas adsorption material or the like may also be used.

In the above embodiment, the intake port 1a is open on the upper side of the housing 50, the ejection port 5a is open on the lateral side of the housing 50, and a fluid introduced through the intake port 1a on the upper side passes through the inner tube 8, the granular filter media 21, and the outer tube 6 in this order and is ejected through the ejection port 5a on the lateral side. However, the present teachings is not limited thereto. For example, the present teachings may have a configuration in which an intake port is open on the lateral side of the housing 50, an ejection port is open on the upper side of the housing 50, and a fluid introduced through the intake port on the lateral side passes through the outer tube 6, the granular filter media 21, and the inner tube 8 in this order and is ejected through the ejection port on the upper side.

Although, in the above embodiment, only one charge port 1b for charging the granular filter media 21 is provided, a plurality of charge ports 1b may be provided. Further, although, in the above embodiment, the charge port 1b is disposed on the lid 1, the charge port 1b may be disposed, for example, on the upper housing 3.

Although the above embodiment describes an example in which each of the outer tube 6 and the inner tube 8 is made of the metal or resin net, a metal plate or a resin plate with a large number of holes punched may be shaped into a cylindrical shape and used instead of the net. Further, a metal plate or a resin plate having a large number of thin slits (e.g., each slit having a width of 1mm or less) can also be used. The shape of the outer tube 6 and the inner tube 8 is not limited to a cylindrical shape, and may be a square tube. The same applies to the housing 50.

Although, in the above embodiment, the housing 50 is divided into three parts: the upper housing 3; the intermediate housing 4; and the lower housing 7, the housing 50 may be divided into, for example, two parts or four parts. Further, the intermediate housing 4 and the side lid 5 may be integrated together.

Although, in the above embodiment, the groove 6a of the outer tube 6 is fitted with the projection 7a of the lower housing 7, a projection formed on the outer tube 6 may be fitted with a groove formed on the lower housing 7 in a manner opposite to the above embodiment. Similarly, although, in the above embodiment, the groove 8b of the inner tube 8 is fitted with the projection 9a of the discharge chute 9, a projection formed on the inner tube 8 may be fitted with a groove formed on the discharge chute 9 in a manner opposite to the above embodiment. Further, although the projection 9a of the discharge chute 9 is engaged with the projection 10b of the hopper 10 in the above embodiment, one of the projections 9a, 10b may be a groove.

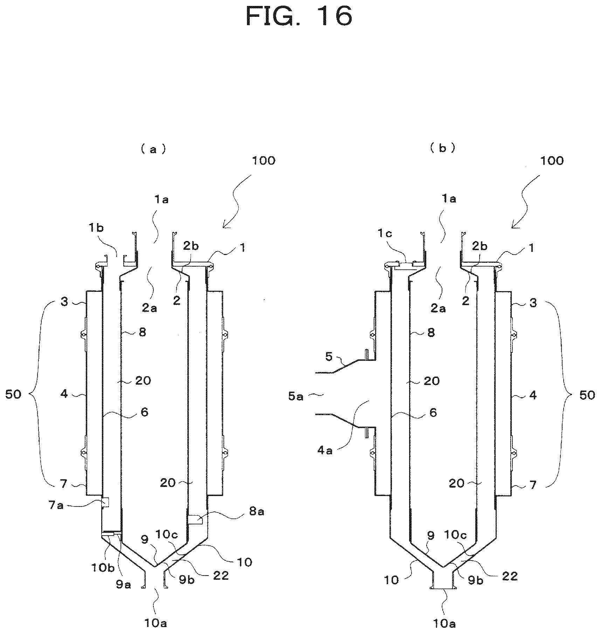

Although, in the above embodiment, the lower housing 7 and the hopper 10 are configured as separate bodies, the lower housing 7 and the hopper 10 may be integrated together as illustrated in Fig. 16. Fig. 16(a) is a sectional view corresponding to Fig. 4(a), and Fig. 16(b) is a sectional view corresponding to Fig. 4(b).

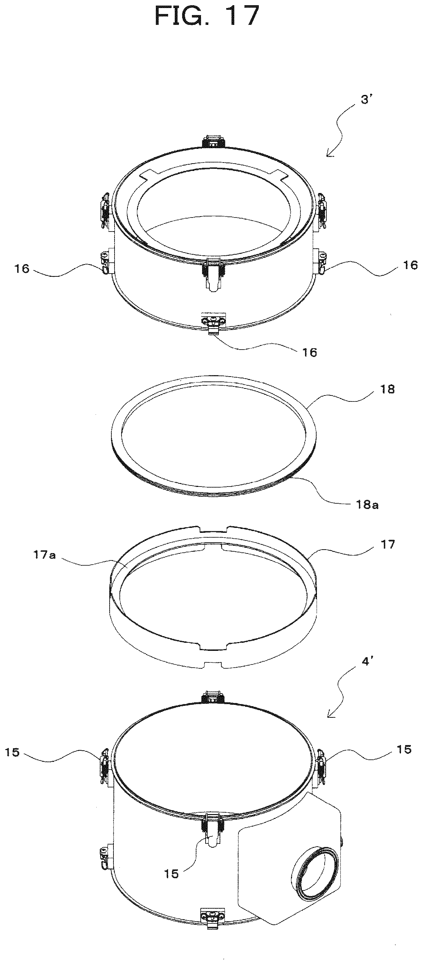

In the above embodiment, the ferrule joint is described as an example of means for coupling the lid 1 and the upper housing 3, coupling the upper housing 3 and the intermediate housing 4, coupling the intermediate housing 4 and the lower housing 7, and coupling the lower housing 7 and the hopper 10. However, for example, a catch clip (snap lock) may be used instead of the ferrule joint. Fig. 17 illustrates an example of such a configuration. In Fig. 17, the structures of an upper housing 3' and an intermediate housing 4' slightly differ from the structures of the upper housing 3 and the intermediate housing 4 of Fig. 3. A plurality of catch clips 15 are disposed on the upper part of the outer periphery of the intermediate housing 4'. A plurality of locking parts 16 on which the respective catch clips 15 are locked are disposed on the lower part of the outer periphery of the upper housing 3'. Further, in this example, an annular member 17 and a gasket 18 are used. A flange 17a is formed on the inner peripheral face of the annular member 17. A groove 18a which extends in the circumferential direction is formed on the outer peripheral face of the gasket 18. The groove 18a of the gasket 18 is fitted with the flange 17a of the annular member 17 so that the gasket 18 is supported on the annular member 17.

The lower part of the upper housing 3' and the upper part of the intermediate housing 4' are fitted with the annular member 17 with the gasket 18 fitted therein so that the catch clips 15 are locked on the respective locking parts 16 with the gasket 18 interposed between the housings 3 ', 4'. Thereby the upper housing 3' and the intermediate housing 4' are coupled together, and the gasket 18 is elastically held between the housings 3', 4' so that the coupling part between the housings 3', 4' is sealed. A similar structure can be employed in coupling between the upper housing 3' and a lid (not illustrated) and coupling between the intermediate housing 4' and a lower housing (not illustrated). When the catch clips 15 are used as the coupling means in this manner, a lower cost and a smaller size can be achieved as compared to the case where the ferrule joint is used. Further, there is an advantage that such a structure achieves an easy operation and is thus suitable for a frequent disassembly operation.

Although the above embodiment describes the pinch valve PV and the split butterfly valve SV as examples of the sanitary valve used as the first valve 51 and the second valve 52, a sanitary valve other than these valves may be used. For example, a butterfly valve including a single valve element can also be used.

### INDUSTRIAL APPLICABILITY

The dust collection apparatus having a local exhaust function and the dust collection/exhaust system using the dust collection apparatus of the present teachings can be widely used in places where measures against exposure are required, such as pharmaceutical facilities where highly active pharmaceutical substances are handled, agricultural chemical facilities where highly active pharmaceutical substances are handled, and chemical product facilities where other chemical substances are handled.

### REFERENCE SIGNS LIST

- 1: lid
- 1a: intake port
- 1b: charge port
- 1c: check window
- 2: charge chute
- 3: upper housing
- 4: intermediate housing
- 5a: ejection port
- 6: outer tube
- 7: lower housing
- 7a: projection (first support part)
- 8: inner tube
- 9: discharge chute
- 9a: projection (second support part)
- 10: hopper
- 10a: discharge port
- 10b: projection (third support part)
- 11: base
- 20: packing space
- 21: granular filter medium
- 22: discharge passage
- 31: suction duct
- 32: suction hood
- 34: local exhaust duct
- 37: fan
- 48: booth
- 50: housing
- 51: first valve
- 52: second valve
- 53: supply box
- 54: collection box
- 100: dust collection apparatus
- 200: dust collection/exhaust system

## Claims

1. A dust collection apparatus (100) having a local exhaust function comprising:
a housing (50);
a filter medium (21) stored inside the housing (50);
an intake port (1a) for introducing a fluid to be filtered to the inside of the housing (50); and
an ejection port (5a) for ejecting the fluid filtered by making contact with the filter medium (21),
wherein the filter medium (21) includes a package of a large number of filter media each having a granular or indefinite shape,
the dust collection apparatus further comprising:
an outer tube (6) disposed inside the housing (50) and configured to allow the fluid to pass therethrough;
an inner tube (8) disposed inside the outer tube (6) and configured to allow the fluid to pass therethrough;
a charge port (1b) for charging and packing the filter medium (21) into a packing space (20) formed between the outer tube (6) and the inner tube (8) from above;
a discharge port (10a) for discharging the filter medium (21) packed in the packing space downward,
a charge chute (2) disposed on an upper side of the inner tube (8) and configured to guide the filter medium (21) charged through the charge port (1b) to the packing space (20);
a discharge chute (9) disposed on a lower side of the inner tube (8) and configured to guide the filter medium (21) packed in the packing space (20) to the discharge port (10a); and
a hopper (10) disposed on a lower side of the outer tube (6) and configured to guide the filter medium (21) packed in the packing space (20) to the discharge port (10a),
wherein a discharge passage (22) communicating with the packing space (20) and the discharge port (10a) is formed between the discharge chute (9) and the hopper (10),
the housing (50) is divided into two, three or four housing parts, wherein the housing parts are detachably coupled together.

2. The dust collection apparatus (100) according to claim 1, wherein
the intake port (12) is open on an upper side of the housing (50),
the ejection port (5a) is open on a lateral side of the housing (50), and
the fluid introduced through the intake port (1a) passes through the inner tube (6), the filter medium (21), and the outer tube (6) in this order, and is ejected through the ejection port (5a).

3. The dust collection apparatus (100) according to claim 1 or 2, wherein
the charge chute (9) is detachably attached to an upper part of the inner tube (8),
the outer tube (6) is detachably supported on the housing (50) with a first support part (7a) disposed on the housing,
the inner tube (8) is detachably supported on the discharge chute (9) with a second support part (9a) disposed on the discharge chute (9), and
the discharge chute (9) is detachably supported on the hopper (10) with a third support part (10b) disposed on the hopper (10).

4. The dust collection apparatus according to any one of claims 1 to 3, wherein
the housing parts include an upper housing (3), a lower housing (7), and an intermediate housing (4) disposed between the upper housing (3) and the lower housing (7), and
the upper housing (3) and the intermediate housing (4) are detachably coupled together, and the lower housing (7) and the intermediate housing (4) are detachably coupled together.

5. The dust collection apparatus (100) according to claim 4, wherein
the hopper (10) is integrally disposed on the lower housing (7).

6. The dust collection apparatus (100) according to any one of claims 1 to 5, further comprising a lid (1) configured to close an upper part of the housing (50),
wherein the lid (1) includes the intake port (1a), the charge port (1b), and a check window (1c) for checking a packed state of the filter medium (21).

7. The dust collection apparatus (100) according to any one of claims 1 to 6, wherein each of the outer tube (6) and the inner tube (8) is made of a metal or resin net.

8. The dust collection apparatus (100) according to any one of claims 1 to 7, wherein
a supply box (53) in which the filter medium (21) is stored is disposed on an upper side of the charge port (1b) with a first valve (51) interposed therebetween, and
a collection box (54) into which the filter medium (21) is collected is disposed on a lower side of the discharge port (10a) with a second valve (52) interposed therebetween.

9. The dust collection apparatus (100) according to claim 8, wherein
out of the first valve (51) and the second valve (52), at least the second valve (52) is a sanitary valve having no pocket in a place making contact with the discharged filter medium (21).

10. The dust collection apparatus (100) according to any one of claims 1 to 9, further comprising a movable base (11) on which the housing (50) is mounted.

11. A dust collection/exhaust system (200) comprising:
the dust collection apparatus (100) according to any one of claims 1 to 10;
a suction duct (31) having one end connected to the intake port (1a) of the dust collection apparatus (100);
a suction hood (32) connected to the other end of the suction duct (31); and
exhaust means configured to exhaust a fluid which has been sucked through the suction hood (32) and from which dust has been removed by the dust collection apparatus (100).

12. A dust collection/exhaust system (200) comprising:
the dust collection apparatus (100) according to any one of claims 1 to 10; and
a filter device (35) for removing dust remaining in a fluid ejected through the ejection port (5a) of the dust collection apparatus (100).

13. The dust collection/exhaust system (200) according to claim 12, further comprising exhaust means configured to exhaust a fluid which has passed through the filter device (35).

14. The dust collection/exhaust system (200) according to claim 11 or 13, wherein the exhaust means includes an existing local exhaust duct (34) and exhausts a fluid from which dust has been removed by the dust collection apparatus (100) through the local exhaust duct (34).

15. The dust collection/exhaust system (200) according to claim 11 or 13, wherein the exhaust means includes a fan (37) and exhausts a fluid from which dust has been removed by the dust collection apparatus (100) through the fan (37).

16. The dust collection/exhaust system (200) according to any one of claims 11 to 15, wherein a suction force of the suction hood (32) is reduced before stopping an operation of the dust collection apparatus (100), and then the operation of the dust collection apparatus (100) is stopped.

17. The dust collection/exhaust system (200) according to any one of claims 11 to 16, further comprising a booth (48) inside or outside of which the dust collection apparatus (100) is installed,
wherein air inside the booth (48) is sucked through the suction hood (32) to bring an internal space of the booth (48) into a negative pressure state having a lower air pressure than outside.

## Patentansprüche

1. Staubsammelgerät (100), das eine lokale Ableitungsfunktion aufweist, mit einem Gehäuse (50),
einem Filtermedium (21), das im Inneren des Gehäuses (50) verstaut ist,
einer Einlassöffnung (1a) zum Einführen eines zu filternden Fluids in das Innere des Gehäuses (50), und
einer Ausstoßöffnung (5a) zum Ausstoßen des durch Kontakt mit dem Filtermedium (21) gefilterten Fluids,
bei dem das Filtermedium (21) ein Paket aus einer großen Anzahl von Filtermedien aufweist, die jeweils eine körnige oder unbestimmte Form aufweisen,
das Staubsammelgerät ferner
ein äußeres Rohr (6), das im Inneren des Gehäuses (50) angeordnet ist und dazu konfiguriert ist, dass das Fluid dort hindurch passieren kann,
ein inneres Rohr (8), das im Inneren des äußeren Rohrs (6) angeordnet ist und dazu konfiguriert ist, dass das Fluid dort hindurch passieren kann,
eine Einfüllöffnung (1b) zum Einfüllen und Packen des Filtermediums (21) von oben in einen Packungsraum (20), der zwischen dem äußeren Rohr (6) und dem inneren Rohr (8) ausgebildet ist,
eine Ableitungsöffnung (10a) zum Ableiten des Filtermediums (21) nach unten, das in dem Packungsraum (20) gepackt ist,
eine Einfüllschütte (2), die an einer oberen Seite des inneren Rohrs (8) angeordnet ist und dazu konfiguriert ist, das Filtermedium (21), das durch die Einfüllöffnung (1b) eingefüllt wird, zu dem Packungsraum (20) zu führen,
eine Ableitungsschütte (9), die an einer unteren Seite des Innenrohrs (8) angeordnet ist und dazu konfiguriert ist, das Filtermedium (21), das in dem Packungsraum (20) gepackt ist, zu der Ableitungsöffnung (10a) zu führen, und
einen Fülltrichter (10) aufweist, der an einer unteren Seite des äußeren Rohrs (6) angeordnet ist und dazu konfiguriert ist, das Filtermedium (21), das in dem Packungsraum (20) gepackt ist, zu der Ableitungsöffnung (10a) zu führen,
bei dem eine Ableitungspassage (22), die mit dem Packungsraum (20) und der Ableitungsöffnung (10a) kommunizierend in Verbindung steht, zwischen der Ableitungsschütte (9) und dem Fülltrichter (10) ausgebildet ist,
das Gehäuse (50) in zwei, drei oder vier Gehäuseteile unterteilt ist, bei dem die Gehäuseteile entfernbar aneinander gekoppelt sind.

2. Staubsammelgerät (100) nach Anspruch 1, bei dem
die Einlassöffnung (1a) an einer oberen Seite des Gehäuses (50) offen ist,
die Ausstoßöffnung (5a) an einer seitlichen Seite des Gehäuses (50) offen ist, und
das Fluid, das durch die Einlassöffnung (1a) eingeführt wird, durch das innere Rohr (6), das Filtermedium (21) und das äußere Rohr (6) in dieser Reihenfolge passiert und durch die Ausstoßöffnung (5a) ausgestoßen wird.

3. Staubsammelgerät (100) nach Anspruch 1 oder 2, bei dem
die Einfüllschütte (2) entfernbar an einem oberen Teil des inneren Rohrs (8) angebracht ist, das äußere Rohr (6) entfernbar an dem Gehäuse (50) mittels eines ersten Lagerungsteils (7a) gelagert wird, der an dem Gehäuse angeordnet ist,
das innere Rohr (8) entfernbar an der Ableitungsschütte (9) mittels eines zweiten Lagerungsteils (9a) gelagert wird, der an der Ableitungsschütte (9) angeordnet ist, und
die Ableitungsschütte (9) entfernbar an dem Fülltrichter (10) mittels eines dritten Lagerungsteils (10b) gelagert wird, der an dem Fülltrichter (10) angeordnet ist.

4. Staubsammelgerät nach einem der Ansprüche 1 bis 3, bei dem
die Gehäuseteile ein oberes Gehäuse (3), ein unteres Gehäuse (7) und ein Zwischengehäuse (4), das zwischen dem oberen Gehäuse (3) und dem unteren Gehäuse (7) angeordnet ist, aufweisen, und
das oberes Gehäuse (3) und das Zwischengehäuse (4) entfernbar aneinander gekoppelt sind, und das untere Gehäuse (7) und das Zwischengehäuse (4) entfernbar aneinander gekoppelt sind.

5. Staubsammelgerät (100) nach Anspruch 4, bei dem
der Fülltrichter (10) integral an dem unteren Gehäuse (7) angeordnet ist.

6. Staubsammelgerät (100) nach einem der Ansprüche 1 bis 5, ferner mit einem Deckel (1), der dazu konfiguriert ist, einen oberen Teil des Gehäuse (50) zu schließen,
bei dem der Deckel (1) die Einlassöffnung (1a), die Einfüllöffnung (1b) und ein Überprüfungsfenster (1c) zum Überprüfen eines gepackten Zustandes des Filtermediums (21) aufweist.

7. Staubsammelgerät (100) nach einem der Ansprüche 1 bis 6, bei dem jedes von dem äußeren Rohr (6) und dem inneren Rohr (8) aus einem Metall oder Kunstharznetz hergestellt ist.

8. Staubsammelgerät (100) nach einem der Ansprüche 1 bis 7, bei dem
ein Zufuhrbehälter (53), in welchem das Filtermedium (21) verstaut ist, an einer oberen Seite der Einfüllöffnung (1b), mit einem ersten Ventil (51) dazwischen eingefügt, angeordnet ist, und
ein Sammelbehälter (54), in welchem das Filtermedium (21) gesammelt wird, an einer unteren Seite der Ableitungsöffnung (10a), mit einem zweiten Ventil (52) dazwischen eingefügt, angeordnet ist.

9. Staubsammelgerät (100) nach Anspruch 8, bei dem
von dem ersten Ventil (51) und dem zweiten Ventil (52) zumindest das zweite Ventil (52) ein Sanitärventil ist, das keinen Hohlraum an einer Stelle aufweist, die mit dem abgeleiteten Filtermedium (21) in Kontakt kommt.

10. Staubsammelgerät (100) nach einem der Ansprüche 1 bis 9, ferner mit einer bewegbaren Basis (11), auf welcher das Gehäuse (50) montiert ist.

11. Staubsammel-/ableitungssystem (200), mit
dem Staubsammelgerät (100) nach einem der Ansprüche 1 bis 10,
einem Absaugkanal (31), der ein Ende aufweist, das mit der Einlassöffnung (1a) des Staubsammelgerätes (100) verbunden ist,
einem Absaughaube (32), die mit dem anderen Ende des Absaugkanals (31) verbunden ist, und
einer Ableitungsvorrichtung, die dazu konfiguriert ist, ein Fluid abzuleiten, das durch den Absaughaube (32) abgesaugt wurde, und von welchem Staub durch das Staubsammelgerät (100) entfernt wurde.

12. Staubsammel-/ableitungssystem (200), mit
dem Staubsammelgerät (100) nach einem der Ansprüche 1 bis 10, und
einer Filtervorrichtung (35) zum Entfernen des Staubs, der in einem Fluid verbleibt, das durch die Ausstoßöffnung (5a) des Staubsammelgerätes (100) ausgestoßen wird.

13. Staubsammel-/ableitungssystem (200) nach Anspruch 12, ferner mit einer Ableitungsvorrichtung, die dazu konfiguriert ist, ein Fluid, welches durch die Filtervorrichtung (35) passiert ist, abzuleiten.

14. Staubsammel-/ableitungssystem (200) nach Anspruch 11 oder 13, bei dem die Ableitungsvorrichtung einen bestehenden lokalen Ableitungskanal (34) aufweist und ein Fluid, von welchem Staub durch das Staubsammelgerät (100) entfernt wurde, durch den lokalen Ableitungskanal (34) ableitet.

15. Staubsammel-/ableitungssystem (200) nach Anspruch 11 oder 13, bei dem die Ableitungsvorrichtung ein Lüfterrad (37) aufweist und ein Fluid, von welchem Staub durch das Staubsammelgerät (100) entfernt wurde, durch das Lüfterrad (37) ableitet.

16. Staubsammel-/ableitungssystem (200) nach einem der Ansprüche 11 bis 15, bei dem eine Saugkraft der Absaughaube (32) reduziert wird, bevor ein Betrieb des Staubsammelgerätes (100) gestoppt wird, und dann der Betrieb des Staubsammelgerätes (100) gestoppt wird.

17. Staubsammel-/-ableitungssystem (200) nach einem der Ansprüche 11 bis 16, ferner mit einer Zelle (48) innenseitig oder außenseitig von welcher das Staubsammelgerät (100) installiert ist,
bei dem Luft im Inneren der Zelle (48) durch die Absaughaube (32) abgesaugt wird, um einen Innenraum der Zelle (48) in einen negativen Druckzustand zu bringen, der einen geringeren Luftdruck als die Außenseite aufweist.

## Revendications

1. Appareil de collecte de poussière (100) ayant une fonction d'évacuation locale comprenant :
un boîtier (50) ;
un milieu filtrant (21) stocké à l'intérieur du boîtier (50) ;
un orifice d'admission (1a) pour introduire un fluide à filtrer à l'intérieur du boîtier (50) ; et
un orifice d'éjection (5a) pour éjecter le fluide filtré par contact avec le milieu filtrant (21),
dans lequel le milieu filtrant (21) comprend un emballage d'un grand nombre de milieux filtrants ayant chacun une forme granulaire ou indéfinie,
l'appareil de collecte de poussière comprend en outre :
un tube extérieur (6) disposé à l'intérieur du boîtier (50) et configuré pour permettre au fluide de le traverser ;
un tube intérieur (8) disposé à l'intérieur du tube extérieur (6) et configuré pour permettre au fluide de le traverser ;
un orifice de charge (1b) pour charger et emballer le milieu filtrant (21) dans un espace d'emballage (20) formé entre le tube extérieur (6) et le tube intérieur (8) par le haut ;
un orifice de décharge (10a) pour décharger le milieu filtrant (21) emballé dans l'espace d'emballage vers le bas,
une goulotte de charge (2) disposée sur un côté supérieur du tube intérieur (8) et configuré pour guider le milieu filtrant (21) chargé à travers l'orifice de charge (1b) vers l'espace d'emballage (20) ;
une goulotte de décharge (9) disposée sur un côté inférieur du tube intérieur (8) et configuré pour guider le milieu filtrant (21) emballé dans l'espace d'emballage (20) vers l'orifice de décharge (10a) ; et
une trémie (10) disposée sur un côté inférieur du tube extérieur (6) et configurée pour guider le milieu filtrant (21) emballé dans l'espace d'emballage (20) vers l'orifice de décharge (10a),
dans lequel un passage de décharge (22) communiquant avec l'espace d'emballage (20) et l'orifice de décharge (10a) est formé entre la goulotte de décharge (9) et la trémie (10),
le boîtier (50) est divisé en deux, trois ou quatre parties de boîtier, dans lequel les parties de boîtier sont accouplées de manière amovible.

2. Appareil de collecte de poussière (100) selon la revendication 1, dans lequel
l'orifice d'admission (12) est ouvert sur un côté supérieur du boîtier (50),
l'orifice d'éjection (5a) est ouvert sur un côté latéral du boîtier (50), et
le fluide introduit par l'orifice d'admission (1a) passe par le tube intérieur (6), le milieu filtrant (21) et le tube extérieur (6) dans cet ordre, et est éjecté par l'orifice d'éjection (5a).

3. Appareil de collecte de poussière (100) selon la revendication 1 ou 2, dans lequel
la goulotte de charge (9) est fixée de manière amovible à une partie supérieure du tube intérieur (8),
le tube extérieur (6) est supporté de manière amovible sur le boîtier (50) par une première partie de support (7a) disposée sur le boîtier,
le tube intérieur (8) est supporté de manière amovible sur la goulotte de décharge (9) par une seconde partie de support (9a) disposée sur la goulotte de décharge (9), et
la goulotte de décharge (9) est supportée de manière amovible sur la trémie (10) par une troisième partie de support (10b) disposée sur la trémie (10).

4. Appareil de collecte de poussière selon l'une quelconque des revendications 1 à 3, dans lequel les parties de boîtier comprennent un boîtier supérieur (3), un boîtier inférieur (7), et un boîtier intermédiaire (4) disposé entre le boîtier supérieur (3) et le boîtier inférieur (7), et
le boîtier supérieur (3) et le boîtier intermédiaire (4) sont accouplés de manière amovible, et le boîtier inférieur (7) et le boîtier intermédiaire (4) sont accouplés de manière amovible.

5. Appareil de collecte de poussière (100) selon la revendication 4, dans lequel la trémie (10) est intégralement disposée sur le boîtier inférieur (7).

6. Appareil de collecte de poussière (100) selon l'une quelconque des revendications 1 à 5, comprenant en outre un couvercle (1) configuré pour fermer une partie supérieure du boîtier (50),
dans lequel le couvercle (1) comprend l'orifice d'admission (1a), l'orifice de charge (1b) et une fenêtre de contrôle (1c) pour contrôler l'état emballé du milieu filtrant (21).

7. Appareil de collecte de poussière (100) selon l'une quelconque des revendications 1 à 6, dans lequel le tube extérieur (6) et le tube intérieur (8) sont tous deux constitués d'un filet en métal ou en résine.

8. Appareil de collecte de poussière (100) selon l'une quelconque des revendications 1 à 7, dans lequel
une boîte d'alimentation (53) dans laquelle le milieu filtrant (21) est stocké est disposée sur un côté supérieur de l'orifice de charge (1b) avec une première vanne (51) interposée entre les deux, et
une boîte de collecte (54) dans laquelle le milieu filtrant (21) est collecté est disposée sur un côté inférieur de l'orifice de décharge (10a) avec une seconde vanne (52) interposée entre les deux.

9. Appareil de collecte de poussière (100) selon la revendication 8, dans lequel parmi la première vanne (51) et la seconde vanne (52), au moins la seconde vanne (52) est une vanne sanitaire n'ayant pas de poche dans un endroit en contact avec le milieu filtrant déchargé (21).

10. Appareil de collecte de poussière (100) selon l'une quelconque des revendications 1 à 9, comprenant en outre une base mobile (11) sur laquelle le boîtier (50) est monté.

11. Système de collecte et d'évacuation de poussière (200) comprenant :
l'appareil de collecte de poussière (100) selon l'une quelconque des revendications 1 à 10 ;
un conduit d'aspiration (31) ayant une extrémité reliée à l'orifice d'admission (1a) de l'appareil de collecte de poussière (100) ;
une hotte d'aspiration (32) reliée à l'autre extrémité du conduit d'aspiration (31) ; et
un moyen d'évacuation configuré pour évacuer un fluide qui a été aspiré à travers la hotte d'aspiration (32) et dont la poussière a été éliminée par l'appareil de collecte de poussière (100).

12. Système de collecte et d'évacuation de poussière (200) comprenant :
l'appareil de collecte de poussière (100) selon l'une quelconque des revendications 1 à 10 ; et
un dispositif de filtrage (35) pour éliminer les poussières restant dans un fluide éjecté par l'orifice d'éjection (5a) de l'appareil de collecte de poussière (100).

13. Système de collecte et d'évacuation de poussière (200) selon la revendication 12, comprenant en outre un moyen d'évacuation configuré pour évacuer un fluide qui a traversé le dispositif de filtrage (35).

14. Système de dépoussiérage/évacuation (200) selon la revendication 11 ou 13, dans lequel le moyen d'évacuation comprend un conduit d'évacuation local existant (34) et évacue un fluide dont la poussière a été éliminée par l'appareil de collecte de poussière (100) à travers le conduit d'évacuation local (34).

15. Système de dépoussiérage/évacuation (200) selon la revendication 11 ou 13, dans lequel le moyen d'évacuation comprend un ventilateur (37) et évacue un fluide dont la poussière a été éliminée par l'appareil de collecte de poussière (100) à travers le ventilateur (37).

16. Système de dépoussiérage/évacuation (200) selon l'une quelconque des revendications 11 à 15, dans lequel la force d'aspiration de la hotte d'aspiration (32) est réduite avant d'arrêter le fonctionnement de l'appareil de collecte de poussière (100), puis le fonctionnement de l'appareil de collecte de poussière (100) est arrêté.

17. Système de dépoussiérage/évacuation (200) selon l'une quelconque des revendications 11 à 16 comprend en outre une cabine (48) à l'intérieur ou à l'extérieur de laquelle l'appareil de collecte de poussière (100) est installé,
dans lequel l'air à l'intérieur de la cabine (48) est aspiré par la hotte d'aspiration (32) pour amener un espace interne de la cabine (48) dans un état de pression négative ayant une pression d'air inférieure à celle de l'extérieur.
